# EUROPÄISCHE PATENTSCHRIFT

(11) **EP 2 640 773 B1**
(45) Veröffentlichungstag und Bekanntmachung des Hinweises auf die Patenterteilung: **03.06.2015**
(21) Anmeldenummer: 11801968.6
(22) Anmeldetag: 15.11.2011
(51) Int. Cl.: C08K 3/00, C09J 171/00, C09J 175/04, C09J 201/10, C09D 171/00, C09D 175/04, C09D 201/10

(54) **SCHNELLHÄRTENDE MASSE MIT GUTEN HAFTEIGENSCHAFTEN**
RAPIDLY CURING COMPOUND HAVING GOOD ADHESIVE PROPERTIES
MATIÈRE À DURCISSEMENT RAPIDE PRÉSENTANT DE BONNES PROPRIÉTÉS D'ADHÉRENCE

(30) Priorität: 19.11.2010 DE 102010052016
(43) Veröffentlichungstag der Anmeldung: 25.09.2013
(73) Patentinhaber: Tremco illbruck Produktion GmbH, 92439 Bodenwöhr (DE)
(72) Erfinder: FUTSCHER, Michael, 83365 Nussdorf (DE); LUFT, Werner, 83512 Reitmehring (DE)
(74) Vertreter: Lippert, Stachow & Partner
(86) Internationale Anmeldenummer: PCT/EP2011/005744
(87) Internationale Veröffentlichungsnummer: WO 2012/065716

(56) Entgegenhaltungen:
- EP-A1- 1 097 183
- EP-A1- 1 102 815
- EP-A1- 1 298 169
- WO-A1-00/05308

## Beschreibung

Die vorliegende Erfindung betrifft schnellhärtende Massen auf Basis von silan-modifizierten Polymeren.

Silan-modifizierte Polymere stellen eine neuere Entwicklung im Bereich der Dichtstoffe dar. Sie erweitern die Palette dieser Werkstoffe, zu denen chemisch reaktive Massen wie Silikone, Polyurethane und Polysulfide sowie chemisch nicht reaktive Massen wie Butyldichtstoffe, lösemittelhaltige Dichtstoffe und Dispersionsdichtstoffe zählen. Dichtstoffe müssen eine Vielzahl von Anforderungen erfüllen, um eine Fuge oder einen Durchbruch abzudichten, insbesondere auch eine gute Haftung zu den Flanken der Fuge bzw. den Substraten aufweisen. Dazu sollen sie in der Regel elastisch sein, um die bei Temperaturänderungen auftretenden, räumlichen Änderungen der Fuge ausgleichen zu können. Auch die Verträglichkeit mit den Substraten muss gewährleistet sein.

Silan-modifizierte Polymere sind kaltvulkanisierende, ein- oder zweikomponentige Massen. Es handelt sich um Polymere, wie Polyether oder Polyurethane, die Silanendgruppen aufweisen, welche bei Raumtemperatur unter Aufnahme von Wasser zu Kautschuk-artigen, elastischen bzw. plastoelastischen Materialien vernetzen. Das Wasser stammt bei einkomponentigen Systemen üblicherweise aus der Atmosphäre. Bei der Kettenverlängerungs- bzw. Vernetzungsreaktion wird von den Silanendgruppen Alkohol abgespalten, bei den am meisten verbreiteten Methoxy- und Ethoxyendgruppen Methanol bzw. Ethanol. Nach erfolgter Aushärtung zeichnen sich die Produkte durch eine gute Eigenhaftung auf den unterschiedlichsten Werkstoffoberflächen und durch eine allgemeine Beständigkeit gegenüber Temperatur-, Licht-, Atmosphären-, Feuchtigkeits- sowie Chemikalieneinwirkung aus.

Die Aushärtung von einkomponentigen, bei Raumtemperatur unter Feuchtigkeitsaufnahme vernetzenden Massen verläuft verhältnismäßig langsam, da das für die Reaktion erforderliche Wasser aus der umgebenden Atmosphäre in das Innere der Masse diffundieren muss. Die Geschwindigkeit der Durchhärtung nimmt daher mit fortschreitender Reaktion im Inneren der Masse ab. Bei geringer Luftfeuchtigkeit oder bei einem ungünstigen Verhältnis von Oberfläche zu Volumen der Masse kann die Reaktion sehr langsam werden oder z.B. in dampfdicht abgeschlossenen Räumen auch vollständig zum Erliegen kommen.

Die an sich vielfältigen Einsatzmöglichkeiten solcher luftfeuchtigkeitshärtenden silan-modifizierten Polymermassen als Kleb- oder Dichtstoffe sind wegen der langsamen Aushärtung insbesondere bei Verwendung in der industriellen Fertigung eingeschränkt. Setzt man in industriellen Anwendungen nur langsam härtende Massen ein, werden bei den aus wirtschaftlichen Gründen erwünschten kurzen Taktzeiten große Zwischenlager für abgedichtete oder verklebte Teile notwendig, um die Aushärtung sicher zu stellen. Gegebenenfalls müssen diese Zwischenlager zusätzlich klimatisiert, befeuchtet bzw. be- und entlüftet werden. Unter Umständen werden auf diese Weise bereits sehr große Stückzahlen gefertigt, bevor erstmals eine Prüfung auf Fehlerfreiheit und Funktion an den fertigen Teilen durchgeführt werden kann. Großflächige Verklebungen zwischen diffusionsdichten Flächen sind in der Praxis mit luftfeuchtigkeitshärtenden Massen ebenso wenig durchführbar wie die Herstellung von Formkörpern in abgeschlossenen Formen.

Es sind auch zweikomponentige Massen auf Basis von silan-modifizierten Polymeren bekannt. Ein Beispiel ist die WO 2009/060199, welche solche Massen als Dichtmasse für Isolierglasscheiben vorschlägt. Die Aushärtung soll durch einen Zusatz von feuchtem Füllstoff, in den Beispielen wird Calciumcarbonat verwendet, erreicht werden. Auch dieses System ist noch nicht in jeder Hinsicht optimal.

Aus DE 69429565 ist bekannt, dass sich α,ωDi(hydroxy)diorganopolysiloxan-Polymere in Gemischen mit unterschiedlichen Vernetzern, Füllstoffen, Weichmachern usw. in der Aushärtung beschleunigen lassen, wenn sie mit einer wasserhaltigen 2. Komponente vermischt werden. Als Trägermaterial für das Wasser werden neben Zeolithen und Kieselgel auch Na₂B₄O₇*10H₂O, Na₂HPO₄*12 H₂O und Na₂CO₃ *10 H₂O genannt. Kaum ein Beispiel erreicht eine Durchhärtung in weniger als 24 Stunden.

Die WO 2010/131037 beschreibt intumeszierende Zusammensetzungen, die als Beschichtung auf Stahlkonstruktionen aufgebracht werden, um diese im Brandfall zu schützen. Die intumeszierenden Zusammensetzungen bestehen aus einer ersten Komponente aus alkoxysilan-terminierten Polyethern oder Polyurethanen und einer zweiten Komponente aus Weichmachern und intumeszierenden Zutaten/Rohstoffen, einer Säurequelle, einer Kohlenstoffquelle und einer Gasquelle. Die Zusammensetzung kann sowohl einkomponentig als auch zweikomponentig formuliert werden. Die Applikation soll durch Aufsprühen erfolgen, so dass die Zusammensetzung von der Viskosität her nicht als Dicht- oder Klebstoff brauchbar ist.

Die EP 1 298 169 A1 beschreibt eine bei Raumtemperatur härtende Zusammensetzung umfassend ein Silan-modifiziertes Acrylat-Polymer sowie CaSO₄·2H₂O als kristallwasserhaltiges Salz.

Die EP 1 102 815 A1 beschreibt schnell härtende Silikonmassen aus zumindest bifunktionell terminierten Diorganopolysiloxanen, einem sauren oder basischen Neutralsalz als Beschleuniger und einem Aminosilan-Vernetzer.

Die EP 1 097 183 A1 beschreibt ein kondensationsvernetzendes Silikon mit hoher Festigkeit.

Die WO 00/05308 A1 beschreibt eine Silikonmasse enthaltend bifunktionell terminierte Diorganopolysiloxane und Acetoxysilan-Vernetzungsmittel zur beschleunigten Aushärtung.

Es wäre vorteilhaft, ein System zu haben, bei welchem das Mischungsverhältnis zwischen den beiden Komponente in weiten Bereichen variiert werden kann, um noch bessere mechanische Eigenschaften und Hafteigenschaften zu erreichen. Weiter wäre es wünschenswert, die Wirksamkeit der Vermischung der Komponenten durch unterschiedliche Farben beider Komponenten beobachten zu können. Außerdem sollten die Komponenten so formuliert werden können, dass die Viskositäten ähnlich bzw. aufeinander abgestimmt sind, um eine gute Vermischung beider Komponenten zu erleichtern. Auch ist die Einstellung der Restfeuchtigkeit der Rohstoffe, insbesondere der Füllstoffe, aufwändig und ein System, bei dem die Aushärtung unabhängig von der Restfeuchte ist, wäre vorteilhaft. Außerdem wäre es vorteilhaft, ein System zu haben, das frei von Lösemitteln (Umweltverträglichkeit, Arbeitssicherheit) und/oder Silikonen (Verträglichkeit mit Substraten) formuliert werden kann.

Die der Erfindung zugrundeliegende Aufgabe bestand daher darin, eine Masse zur Herstellung von Dicht- und/oder Klebstoffen zur Verfügung zu stellen, die unabhängig von der umgebenden Luftfeuchtigkeit aushärten kann. Der Aushärteprozess der Masse soll auch unabhängig von der Restfeuchte von Füllstoffen und anderen Rohstoffen sein, sowie ohne den Zusatz von flüssigem Wasser erfolgen. Dabei soll neben den typischen Merkmalen der bisher bekannten Vulkanisate die Eigenhaftung zu verschiedenen Werkstoffen, die mechanischen Eigenschaften sowie die Beständigkeit gegen Temperaturen und Chemikalien erhalten bleiben und die Schneidbarkeit in Verbindung mit der Oberflächen-Klebfreiheit innerhalb kurzer Zeit, d.h. vorzugsweise innerhalb von Minuten bis wenigen Stunden erreicht sein, die Masse also schnell härtbar sein.

Es wurde nun gefunden, dass Mischungen aus silan-modifizierten Polymeren mit kristallwasserhaltigen, sauren oder basischen Salzen und aminischen Haftvermittlern, wobei die Massen ggf. Weichmacher, Füllstoffe, Katalysatoren, Pigmente, andere Haftvermittler, Farbstoffe, übliche Additive sowie Lösungsmittel enthalten können, die genannten Aufgaben lösen.

Die Erfindung betrifft daher eine härtbare Masse, erhältlich als Mischung von wenigstens zwei getrennt zu lagernden Komponenten, wobei eine Komponente ein silan-modifiziertes Polymer umfasst, diese oder eine zweite Komponente ein kristallwasserhaltiges, saures oder basisches Salz umfasst, und in mindestens einer der beiden Komponenten ein aminischer Haftvermittler enthalten ist, mit der Maßgabe, dass keine Komponente alle drei Substanzen enthält. Die Erfindung betrifft außerdem ein Verfahren zur Beschleunigung der Härtung von Massen auf Basis von silan-modifizierten Polymeren, wobei ein mit Wasser vernetzbares silan-modifiziertes Polymer, ein kristallwasserhaltiges, saures oder basisches Salz und ein aminischer Haftvermittler so auf mindestens zwei Komponenten verteilt bereitgestellt werden, dass keine Komponente alle drei Substanzen enthält, und die Komponenten zur Härtung vermischt werden.

Die erfindungsgemäßen Massen werden in Form von zumindest zweikomponentigen Mischungen bereitgestellt. Entsprechend dem Einsatzzweck sind die Massen in an sich bekannter Weise pastenartig oder flüssig, vorzugsweise pastenartig, eingestellt. Der Einsatz der kristallwasserhaltigen, sauren oder basischen Salze als Beschleuniger-Komponente führt nach der Mischung der Komponenten zu einer gegenüber 1 K-Systemen beschleunigten, vorzugsweise einer schnellen Härtung, d.h. einem schnellen Erreichen der Schneidbarkeit und einer schnellen Oberflächen-Klebfreiheit der Massen.

Schnell härtbar bedeutet, dass innerhalb von Minuten, z.B. 5, 15, 30 oder 60 Minuten, bis hin zu wenigen Stunden, z.B. 1, 2, 3 oder 4 Stunden eine solche Härtung stattfindet, dass die Masse schneidbar ist. Erfindungsgemäße Mischungen können auch so formuliert werden, dass die Schneidbarkeit erst nach mehr als 10, 20 oder 30 Stunden erreicht wird. Solche Massen sind weniger bevorzugt, sie härten gegenüber 1 K-Systemen deutlich beschleunigt, sind aber nicht schnell härtend.

Zur Prüfung der Härtung der Massen wird die Schneidbarkeit wie folgt bestimmt. Nach der Vermischung der miteinander reagierenden Komponenten bzw. aus einer zu prüfenden Masse wird eine Raupe von mindestens 8 mm Höhe und 8 mm Breite auf einen trockenen, ebenen Untergrund aufgebracht. Alle 5 bis 10 Minuten wird die Raupe mit einem Messer quer angeschnitten. Als Schneidbarkeit wird die Zeit nach dem Mischen angegeben, nach der beim Durchschneiden einer Raupe keine pastösen Rückstände am Messer verbleiben. Wenn die Schneidbarkeit der Masse erreicht ist, ist die Durchhärtung soweit gleichmäßig gegeben, dass die Raupe sowohl an der Außenfläche als auch im Inneren vernetzt ist. Der Zeitpunkt der Schneidbarkeit ist eine Kenngröße, die nicht mit der Endfestigkeit gleichzusetzen ist. Die Endfestigkeit wird erst später erreicht.

Als Maß für die Endfestigkeit wird 7 Tage nach der Herstellung der Mischung der Komponenten bzw. dem Beginn des Luftkontaktes einer Masse die Shore A Härte nach DIN 53505 bestimmt. Weitere wichtige Eigenschaften sind die Zugfestigkeit und die Bruchdehnung, die nach DIN EN 28339 bestimmt werden.

Die erfindungsgemäßen Massen haben keine intumeszierenden Eigenschaften, d.h. sie enthalten keine Komponenten, welche durch die Hitze im Brandfalle eine wesentliche Vergrößerung des Volumens bewirken.

Silan-modifizierte Polymere sind an sich bekannt. Es handelt sich um Strukturen, bei denen eine Polymerkette, z.B. ein Polyether oder ein Polyurethan, Silanendgruppen aufweist. Besonders geeignet sind Strukturen wie:

(Alkyl-O)₃-Si-X-Polymer-X-Si-(O-Alkyl)₃

und

(Alkyl-O)₂-(Alkyl)-Si-X-Polymer-X-Si-(Alkyl)-(O-Alkyl)₂

Alkyl steht dabei typischerweise für CH₃ oder C₂H₅. Es können verschiedene Alkylreste vorliegen, also z.B. an einem Si ein oder zwei Methoxy- und zwei oder eine Ethoxygruppe oder eine Methyl- und zwei Ethoxygruppen. Am meisten verbreitet sind silan-modifizierte Polymere, bei denen die Alkylgruppen gleich sind. X steht für eine Verbindungsgruppe, welche das Polymer mit dem Silan verknüpft/verbindet, z. B. eine Alkylgruppe, wobei die Verbindungsgruppen gleich oder verschieden sein können. Polymer steht für eine Polymerkette wie vorzugsweise ein Polyether oder ein Polyurethan. Es versteht sich, dass die Polymerketten wie üblich nicht alle gleich lang sind. Ebenso ist es möglich, verzweigte Polymerketten einzusetzen. Erfindungsgemäß handelt es sich um zumindest bifunktionell Silan-modifizierte Polymere. Silikone, wie z.B. Polydimethylsiloxan, oder Alkoxy-terminierte Silikone sind keine silan-modifizierten Polymere im Sinne der Erfindung.

Silan-modifizierte Polymere sind unter verschiedenen Bezeichnungen wie MS-Polymer, Hybridpolymer, PUSI, SPUR kommerziell erhältlich. Die Härtungsreaktion verläuft unter Zutritt von Wasser durch Alkoholabspaltung von einem ersten silan-modifizierten Polymer und dann unter Vernetzung mit weiteren silan-modifizierten Polymeren und weiterer Abspaltung von Alkohol.

Geeignete silan-modifizierte Polymere sind z.B. die Hybridpolymere STP-E10, STP-E15, STP-E30, STP-E35 von Wacker Chemie GmbH, die Hybridpolymere ST 61, ST 75, ST 77, ST XP 48 von hanse chemie AG, die MS-Polymere SAT 010, SAX 350, S203H, S303H, SAX 400, S227 von Kaneka Corporation oder die SPUR-Prepolymere Desmoseal S XP 2662, XP 2458, XP 2636, XP 2749 von Bayer Material Science AG, und SPUR 1050MM, SPUR 1015LM, SPUR 3100HM, SPUR 3200MM von Momentive Performance Materials Inc. oder Gemische aus zwei oder mehr der genannten.

Der Anteil der silan-modifizierten Polymere in einer, z.B. der ersten, Komponente kann 100 Gew.-% betragen, vorzugsweise liegt er im Bereich von 3 bis 50 Gew.-%. Der Anteil richtet sich auch nach dem Mischungsverhältnis der Komponenten und danach, ob in weiteren Komponenten ebenfalls silan-modifiziertes Polymer enthalten ist. Insgesamt sollte die aus allen Komponenten gemischte Masse von 5 bis 50 Gew.-%, vorzugsweise von 10 bis 40 Gew.-% silan-modifiziertes Polymer enthalten. Als weitere Bestandteile dieser, z.B. ersten, Komponente kommen Weichmacher, Füllstoffe, Stabilisatoren, Trocknungsmittel, Katalysatoren, Haftvermittler und andere für Dichtstoffe auf Basis von silan-modifizierten Polymeren übliche Additive in Betracht.

Die erfindungsgemäße Masse enthält in einer, vorzugsweise einer zweiten, Komponente kristallwasserhaltige Salze, die in wässriger Lösung sauer oder basisch reagieren. Erfindungsgemäß ist es wichtig, dass die Salze kristallwasserhaltig sind. Der Einsatz von Salzen, die eine Restfeuchte, also zusätzlich freies, nicht als Kristallwasser gebundenes Wasser aufweisen ist möglich, aber im Rahmen der Erfindung nicht erforderlich und nicht bevorzugt. Die kristallwasserhaltigen, saure oder basische wässrige Lösungen ergebenden Salze, im folgenden auch kurz als "saure oder basische Salze" oder als "Salze" bezeichnet, wirken als Beschleuniger für die Härtung der silan-modifizierten Polymere. Unter sauren und basischen Salzen werden Verbindungen verstanden, bei denen dem Kation eine schwache Base und/oder dem Anion eine schwache Säure zugrunde liegt. Über die unterschiedlichen Dissoziationsgrade der zugrundeliegenden Säuren und Basen reagieren die wässrigen Lösungen der Salze sauer bzw. basisch.

Besonders brauchbar sind Salze, bei denen das Anion ausgewählt ist unter Phosphat, Sulfat, meta-Silikat, Hydroxidsulfat und Hydroxidphosphat, oder Salze, die ein sauer oder basisch wirkendes Kation, ausgewählt unter Metallkationen von Metallen der Hauptgruppe III, der Nebengruppe VIII und Ammonium enthalten. Erfindungsgemäß kommt es darauf an, dass die wässrige Lösung des Salzes einen pH-Wert oberhalb oder unterhalb von 7 aufweist. Dies wird dadurch erreicht, dass das Salz zumindest ein Ion enthält, welches einer schwachen Säure oder schwachen Base entspricht und dementsprechend in wässriger Lösung sauer oder basisch reagiert.

Unter wirtschaftlichen Gesichtspunkten sind kostengünstig kommerziell verfügbare Salze bevorzugt. Auch ist es günstig, wenn die Salze als solche möglichst wenig toxisch und gut handhabbar sind.

Besonders bevorzugt sind die sauren Salze des Aluminiums, insbesondere das Sulfat, das Chlorid und das Nitrat, die Aluminiumalaune des Ammoniumions und der Alkalimetalle, insbesondere des Natriums und des Kaliums. Darüber hinaus sind als vorteilhafte Vertreter der sauren Salze die Salze des Eisens zu nennen, dabei insbesondere das Eisen-II-sulfat, das Eisen-III-phosphat, das Eisenalaun des Ammoniumions, sowie das Ammoniumeisen-II-sulfat (" Mohrsches Salz"). Beschleunigend wirkende basische Salze sind beispielsweise Trinatriumphosphat, Ammoniumaluminiumalaun, Trimagnesiumphosphat und Natriummetasilikat. Die sauren und basischen Salze können auch in Kombination eingesetzt werden.

Ein weiterer, wesentlicher Bestandteil der erfindungsgemäßen Massen sind aminische Haftvermittler. Der Haftvermittler kann entweder zusammen mit dem Salz und/oder vorzugsweise zusammen mit dem silan-modifizierten Polymer in einer Komponente kombiniert werden. Auch eine Bereitstellung als dritte Komponente ist möglich, jedoch weniger bevorzugt. Wichtig ist, dass in keiner Komponente silan-modifiziertes Polymer, Salz und Haftvermittler zusammen enthalten sind.

Bei dem Haftvermittler handelt es sich um eine aminische Silan- bzw. Siloxanverbindung. Bevorzugte Silanverbindungen sind z.B. aminische Alkoxysilane wie Aminopropyltrimethoxysilan, Aminopropyltriethoxysilan, N-(n-Butyl)-3-aminopropyltrimethoxysilan, N-(beta-Aminoethyl)-gamma-aminopropyltrimethoxysilan, mit dem Strukturelement

R,R'N-Verb-Si-(O-Alkyl)₃

oder

R,R'N-Verb-Si-(R")-(O-Alkyl)₂

wobei Alkyl bevorzugt CH₃ oder C₂H₅ ist, Verb für eine Alkylkette, bevorzugt für n-C₃H₆, steht, und R und R' organische Reste oder Wasserstoff sind und R" ein organischer Rest ist. Auch Gemische von zwei oder mehr dieser Verbindungen sind brauchbar. Die aminischen Haftvermittler sind kommerziell erhältlich, z.B. aminische Siloxanverbindungen unter der Bezeichnung Haftmittel AMS 50, Haftmittel AMS 60, Haftmittel AMS 70 von Wacker Chemie GmbH oder unter Y-15744 von Momentive Performance Materials Inc., und die bevorzugten aminischen Silanverbindungen z.B. unter der Bezeichnung Haftmittel AMS 24, Geniosil GF93 von Wacker Chemie GmbH, Dynasylan DAMO-T von Evonik Degussa GmbH oder unter Silquest A 1110 von Momentive Performance Materials Inc. Es werden vorteilhaft 0,05 bis 10 Gew.-%, vorzugsweise 0,1 bis 5 Gew.-% und insbesondere 0,5 bis 2 Gew.-% aminischer Haftvermittler bezogen auf das Gewicht der Komponente eingesetzt. Auch der Anteil an aminischem Haftvermittler hängt vom Mischungsverhältnis der Komponenten ab. Insgesamt sollte die erfindungsgemäße Masse 0,1 bis 5 Gew.-%, vorzugsweise 0,5 bis 2 Gew.-% aminischen Haftvermittler enthalten.

Erfindungsgemäß können auch nicht aminische Haftmittel zusätzlich eingesetzt werden, um die Haftung zu Substraten weiter zu verbessern, z.B. 3-Glycidoxypropyltrimethoxysilan, 3-Methyacrylsäureesterpropyltrimethoxysilan, Propan-3-thioltrimethoxysilan, Propan-3-thioltriethoxysilan, Propan-3-thiolmethyl-dimethoxysilan und andere.

Ein bevorzugter weiterer Bestandteil der Komponenten sind Weichmacher. Als Weichmacher sind zu nennen: Phthalate (z.B. Dibutyl-, Dioctyl-, Dicyclohexyl-, Diisooctyl-, Diisododecyl-, Dibenzyl-, Diisononyl- und Butylbenzylphthalate), Cyclohexandicarbonsäureester (z.B. 1,2-Diisononyl-cyclohexandicarbonsäureester, kurz DINCH), Ester organischer Säuren wie Trimellitsäure, Pyromellitsäure, Adipinsäure, Sebacinsäure, Fumarsäure, Maleinsäure, Itaconsäure und Zitronensäure, Derivate von Polyestern, Polyethern, Epoxyden und ähnlichen, Polybutene, Rizinusöl (Castor oil), Naturöle. Die Anteile liegen vorzugsweise im Bereich von 0 bis 40 Gew.-%, typisch sind 10 bis 20 Gew.-%. Es können mehrere Weichmacher zum Einsatz kommen.

Es ist vorteilhaft, wenn die Komponenten Füllstoffe enthalten. Ein bevorzugter Füllstoff ist Kieselsäure, z.B. pyrogene Kieselsäure, insbesondere hydrophobierte Typen. Der Anteil Kieselsäure beträgt bevorzugt von 0 bis 30 Gew.-%. Weitere geeignete Füllstoffe sind gefällte Kreiden, behandelt und unbehandelt, natürliche Kreiden, behandelt und unbehandelt, Bentonite, Bariumsulfat, Tone, Aluminiumoxide und -hydroxide, Chromoxide, Titandioxid, Graphit, Russ (z.B. Printex L), bevorzugt Kreide, in Anteilen von 0 bis 55 Gew.-%. Es ist üblich und auch erfindungsgemäß möglich, mehrere Füllstoffe zu verwenden. Der Einsatz von Füllstoffen, die eine hohe Restfeuchte aufweisen, z.B. Kreiden, ist möglich, aber im Rahmen der Erfindung nicht erforderlich. Eine Trocknung ist aber ebenfalls entbehrlich, typische Restfeuchten von Kreiden im Bereich 0,2 bis 0,4 % oder von Kieselsäuren im Bereich < 1% stören nicht. Einen merklichen Einfluss auf die Härtung üben diese geringen Restfeuchten nicht aus.

Weiterhin können Stabilisatoren wie UV-Absorber, Lichtschutzmittel, Antioxidantien, etc. in Gesamtanteilen von 0 bis 2 Gew.-%, vorzugsweise von 0,2 bis 0,6 Gew.-% enthalten sein. Es ist möglich und üblich, Gemische einzusetzen, beispielsweise ein oder mehrere UV-Absorber und Antioxidantien.

Typische Additive sind außerdem Trocknungsmittel: beispielsweise Vinyltrimethoxysilan, Methyltrimethoxysilan, Vinyltriethoxysilan. Deren Anteile betragen von 0 bis 5 Gew.-%, bevorzugt von 0,5 Gew.-% bis 3 Gew.-%.

Bevorzugt enthalten die Bestandteile der erfindungsgemäßen Massen keine wesentliche Restfeuchte. Die Restfeuchte sollte weniger als 1 Gew.-%, vorzugsweise weniger als 0,5 Gew.-% und ganz besonders bevorzugt weniger als 0,1 Gew.-% betragen.

Es können Katalysatoren, wie Zinnverbindungen, z.B. Dibutylzinndilaurat, Dioctylzinndilaurat und andere zinnorganische Verbindungen, enthalten sein. Übliche Anteile betragen von 0 bis 2 Gew.-%, bevorzugt von 0,1 Gew.-% bis 1 Gew.-%. Bei silan-modifizierten Polymeren auf Basis der α-Silan-Technologie, d.h. mit einer Amingruppe -NH- in α-Stellung zum Silicium der Alkoxysilan Endgruppe als Bestandteil der Verbindungsgruppe X, kann auf den Einsatz von (Zinn)Katalysator verzichtet werden. Bei anderen Silan-modifizierten Polymeren wird vorzugsweise ein Katalysator eingesetzt, um eine schnelle Härtung zu erreichen. Bei Verwendung eines Katalysators bewährt es sich, wenn die erfindungsgemäße Masse aus allen Komponenten insgesamt 0,01 bis 2 Gew.-%, vorzugsweise 0,1 bis 1 Gew.-% Katalysator enthält.

Andere Additive wie Rheologieadditive, Polyisobutylene wie Hyvis 30, Waxe, Farbpigmente wie Russe, Titandioxid, Eisenoxide, etc. können enthalten sein. Wenn sie zugefügt werden, verwendet man die üblichen Mengen.

In einer bevorzugten Ausführungsform sind die Komponenten der erfindungsgemäßen Masse unterschiedlich eingefärbt.

Der Zusatz von Lösemitteln ist erfindungsgemäß nicht erforderlich. Es ist aus Gründen des Umweltschutzes bevorzugt, wenn keine Lösungsmittel enthalten sind. Eine Entfernung von Lösungsmitteln, welche, z.B. von der Herstellung her, in den verwendeten Substanzen vorliegen, ist aber im allgemeinen nicht notwendig. Sofern gewünscht, können als Lösungsmittelz.B. aliphatische Kohlenwasserstoffe, Toluol, Xylole und Isopropanol eingesetzt werden.

Die kristallwasserhaltigen, sauren oder basischen Salze können der einzige Bestandteil einer, z.B. der.zweiten Komponente sein. Das Salz wird jedoch bevorzugt mit einem Träger vermischt bzw. in einem Träger dispergiert, um die Komponenten in pastöser bzw. flüssiger Form vermischen zu können. Als Träger sind bevorzugt Weichmacher wie oben beschrieben, silan-modifizierte Polymere wie oben beschrieben, und, weniger bevorzugt, Silikone wie Hydroxy- oder Alkylterminierte Polydialkylsiloxane, z.B. Methyl-terminierte Polydimethylsiloxane. Es können auch Gemische von Weichmacher und silan-modifiziertem Polymer oder, weniger bevorzugt, von Weichmacher und Silikonen als Träger zum Einsatz kommen.

Bei dieser Ausführungsform enthält die Komponente, in der das bzw. die kristallwasserhaltigen, sauren oder basischen Salze enthalten sind, bevorzugt von 10 bis 95 Gew.-% Träger und von 5 bis 90 Gew.-% Salz. Der Anteil Salz in der Komponente hängt davon ab, in welchem Gewichtsverhältnis die Komponenten vermischt werden. In Bezug auf Massen aus einer ersten Komponente enthaltend das silan-modifzierte Polymer und einer zweiten Komponenten enthaltend das Salz ist bei einem Mischungsverhältnis der Komponente von z.B. von 100:10 ein hoher Anteil an Salz zu wählen, bei einem Mischungsverhältnis von 100:100 oder 100 : 400 kann der Anteil an Salz niedriger eingestellt werden. Der Anteil Salz sollte bezogen auf die gesamte Mischung der härtbaren Masse im Bereich von 1 bis 15 Gew.-% liegen, vorzugsweise von 3 bis 10 Gew.-%.

In der Komponente mit dem Salz können neben dem bzw. den Träger(n) und dem oder den Salz(en) noch Weichmacher, Füllstoffe, übliche Additive, Pigmente, Farbstoffe sowie Lösungsmittel wie oben beschrieben enthalten sein. Bevorzugt enthält die zweite Komponente das oder die Salze und einen oder mehrere Träger sowie einen oder mehrere Füllstoffe, insbesondere Kreide und/oder pyrogene Kieselsäure.

Besonders bevorzugt sind härtbare Massen mit einer ersten Komponente enthaltend silan-modifiziertes Polymer, aminischen Haftvermittler und ggf. Weichmacher, Füllstoffe, Stabilisatoren, Trocknungsmittel, andere Haftvermittler, Katalysatoren und andere übliche Additive, sowie einer zweiten Komponente enthaltend kristallwasserhaltiges, saures oder basisches Salz in silan-modifiziertes Polymer und/oder Weichmacher sowie ggf. Füllstoffe, übliche Additive, Pigmente und Farbstoffe. Die erste Komponenten enthält besonders bevorzugt silan-modifiziertes Polymer, Weichmacher, aminische(n) Haftvermittler, ggf. Katalysator und Füllstoffe. Die zweite Komponente enthält vorzugsweise kristallwasserhaltiges, saures oder basisches Salz in silan-modifiziertem Polymer und/oder Weichmacher sowie Füllstoffe.

Weitere bevorzugte Massen haben eine erste Komponente aus silan-modifiziertem Polymer, je nach Polymer mit oder ohne Katalysator und ggf. Weichmacher, Füllstoffe, Stabilisatoren, Trocknungsmittel, nicht-aminische Haftvermittler, Katalysatoren und andere übliche Additive sowie eine zweite Komponente enthaltend kristallwasserhaltiges, saures oder basisches Salz in Weichmacher, aminische(n) Haftvermittler sowie ggf. Füllstoffe, übliche Additive, Pigmente und Farbstoffe. Die erste Komponenten enthält hier besonders bevorzugt silanmodifiziertes Polymer, Weichmacher, ggf. Katalysator und Füllstoffe. Die zweite Komponente enthält hierbei vorzugsweise kristallwasserhaltiges, saures oder basisches Salz in Weichmacher, aminische(n) Haftvermittler sowie Füllstoffe.

Noch weitere bevorzugte Massen haben eine erste Komponente aus aminischem Haftvermittler und eine zweite Komponente enthaltend kristallwasserhaltiges, saures oder basisches Salz in silan-modifiziertem Polymer. Auch dabei können in einer oder beiden Komponenten Weichmacher, Füllstoffe, Stabilisatoren, Trocknungsmittel, andere Haftvermittler, Katalysatoren und andere übliche Additive enthalten sein, vorzugsweise sind zumindest Weichmacher und Füllstoffe enthalten. Je nach silan-modifiziertem Polymer ist ggf. in mindestens einer Komponente ein Katalysator enthalten.

Vorzugsweise die erfindungsgemäße Masse in allen Komponenten lösemittelfrei, silikonfrei oder lösemittel- und silikonfrei.

Bevorzugte Mischungsverhältnisse (Gewicht) der Komponenten liegen im Bereich von 100 : 3 bis 100 : 1000, insbesondere von 100 : 8 bis 100 : 100, wobei auf die erste Komponente, das oder die wesentliche Menge des silan-modifizierten Polymers entfällt und das Salz typischerweise in der zweiten Komponente enthalten ist.

Es liegt im Rahmen der Erfindung, die härtbare Masse aus mehr als zwei, z.B. drei Komponenten zu mischen, was jedoch nicht bevorzugt ist.

Mögliche Anwendungen der erfindungsgemäßen, beschleunigt aushärtenden Masse sind das Verkleben von Bauteilen, wie Leisten, Blenden etc., das Verkleben Gehäusedeckeln, das Verkleben von Bauteilen im Anlagenbau, ein Verkleben in Verbindung mit lackierten Oberflächen (da Silikon-frei), insbesondere Glas-Metall, Glas-beschichtetes Metall, Glas-Kunststoff, Glas-Glas, Metall-Metall, Kunststoff-Kunststoff. Weiterhin sind die Massen als Isolierglas-Dichtstoff, speziell für die sekundäre Abdichtung, verwendbar und für das Abdichten von Fugen im Boden-, Wand- und Deckenbereich sowohl innen als auch außen.

Die Herstellung und Verarbeitung der erfindungsgemäßen Massen entspricht an sich der bei silan-modifizierten Polymeren und Silikonmassen bekannten Technik und soll daher nicht näher beschrieben werden. In der Praxis kann man beide Komponenten z.B. aus Side-by-side oder Koaxialkartuschen, aus Schlauchbeuteln mit Hilfe spezieller Pistolen, aus Fässern und Hobbocks über statische und dynamische Mischeinheiten vermischen. Die Mischtechnik wird auf die Härtungsgeschwindigkeit und die spezifische Anwendung abgestimmt.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiel 1

Eine Komponente A1 wurde durch Mischen der in Tabelle 1 angegebenen Rohstoffe im Planetendissolver unter Vakuum hergestellt.

**Tabelle 1**

| **Komponente A1, Basis STP-E** | |
|---|---|
| Silan-modifiziertes Polymer Geniosil STP-E10 | 16% |
| Weichmacher Diisononylphthalat (DINP) | 118% |
| Stabilisatoren | 10,5% |
| Gefälltes, beschichtetes CaCO₃ | 48% |
| Natürliches CaCO₃ | 12% |
| Vinyltrimethoxysilan | 1,5% |
| Haftvermittler γ-Aminopropyltrimethoxysilan | 1 % |
| Katalysator Dibutylzinndilaurat | 0,02% |
| Farbpaste | 2,98% |
| Summe | 100% |

Das Mischverfahren ergab eine homogene Masse, die mit der Luftfeuchtigkeit von der Oberfläche her langsam durchhärtete. Nach 24 Stunden unter 23°C und 50% relativer Luftfeuchte hatte sich eine Haut gebildet mit einer Schichtstärke von ca. 2,5 mm. Eine Raupe von 8 mm Höhe und 8 mm Breite aus Komponente A1 härtete nur langsam durch, die Schneidbarkeit war erst nach 4 Tagen erreicht.

Jeweils 100 g der Komponente A1 wurden mit 10 g verschiedener basischer oder saurer Salze im Speedmixer 30 Sekunden intensiv vermischt. Anschließend wurde die Schneidbarkeit der Mischung bestimmt und nach 7 Tagen die Shore A Härte nach DIN 53505 gemessen. Die untersuchten Salze und Ergebnisse fasst Tabelle 2 zusammen.

**Tabelle 2**

| Salz | pH * | schneidbar nach | Shore A Härte |
|---|---|---|---|
| Na₃PO₄ x 12 H₂O | 12 | 30 Minuten | |
| NH₄MgPO₄ x 6 H₂O | 8 | 20 Stunden | |
| Mg₃(PO₄)₂ x 8 H₂O | 10 | 39 Stunden | |
| Na₃PO₄x 6 H₂O | 12 | 60 Minuten | |
| Al(OH)(PO₄) x 12 H₂O | 7,2 | 30 Minuten | |
| Na₃PO₄ x 10 H₂O | 12 | 10 Minuten | 43 |
| Al₂(SO₄)₃ x 16 H₂O | 3-4 | 35 Minuten | 40 |
| NH₄Fe(SO₄)₂ x 12 H₂O | 1 | 10 Minuten | 35 |
| Fe(PO₄) x 4 H₂O | sauer | 5 Minuten | 43 |
| FeSO₄ x 7 H₂O | 3-4 | 35 Minuten | 40 |
| NH₄Al(SO₄)₂ x 12 H₂O | 3-4,5 | 2,5 Stunden | 50 |
| KAl(SO₄)₂ x 12 H₂O | 3-3,5 | 2,5 Stunden | 40 |

| | | | |
|---|---|---|---|
| *pH-Wert laut Herstellerangabe | | | |

Die Beispiele belegen, dass Mischungen mit einem Zusatz von kristallwasserhaltigem, saurem oder basischen Salz eine gleichmäßige Durchhärtung erreichen, auch in Schichten >8 mm. Im Vergleich dazu härten nicht beschleunigte Formulierungen nur langsam mit der Luftfeuchtigkeit, dies geschieht von der Oberfläche her. Im Inneren ist das gemischte Material noch pastös und es verbleibt ein pastöser Rückstand am Messer. Bei Raupen mit einer Schichtdicke von 8 mm ist die Schneidbarkeit erst nach 4 Tagen gegeben.

### Beispiel 2

In einem weiteren Versuch wurde Aluminiumhydroxidphosphat x 12 H₂O nicht direkt mit der Komponente A1 vermischt, sondern mit Träger zu einer Komponente B vermischt eingesetzt. Hierzu wurden jeweils 8 Gew.-% des Aluminiumhydroxidphosphats mit einem Labordissolver bei Raumtemperatur unter Vakuum mit 92 Gew.-% verschiedener Träger zu einer Komponente B vermischt. Die Vermischung ergab jeweils eine weissliche Suspension. Die verwendeten Träger und die Ergebnisse der Messung der Schneidbarkeit von im Speedmixer hergestellten Mischungen aus 100 Gew.-Teilen Komponente A1 aus Beispiel 1 mit 100 Gew.-Teilen dieser Komponenten B fasst Tabelle 3 zusammen.

**Tabelle 3**

| Träger | Schneidbarkeit nach |
|---|---|
| ST-61 | 3 Stunden |
| SPUR 1015 LM | 3 Stunden |
| Desmoseal S XP2636 | 2 Stunden |
| Geniosil STP-E10 | 30 Minuten |
| Diisononylphthalat | 2 Stunden |

Diese Beispiele zeigen, dass das mit Träger vermischte kristallwasserhaltige basische Salz im Vergleich zu der luftfeuchtigkeitshärtenden Komponente A1 wesentlich beschleunigt durchhärtet. Die Schneidbarkeit bei einer Raupe von mind. 8 mm Höhe und 8 mm Breite liegt abhängig vom Träger zwischen 30 Minuten und 3 Stunden.

### Beispiel 3

Die Auswirkung einer Lagerung der Komponente B aus mit einem Träger vermischtem Aluminiumhydroxidphosphat x 12 H₂O wurde untersucht. Dazu wurden Mischungen aus 8 % Aluminiumhydroxidphosphat x 12 H₂O und 92 % silan-modifiziertem Polymer ST-61 bzw. Weichmacher Diisononylphthalat 6 Monate gelagert. Bei der Mischung mit Diisononylphthalat hatten sich Festbestandteile abgesetzt, die vor dem Vermischen mit Komponente A1 aus Beispiel 1 aufgerührt wurden. Eine Mischung aus 100 Teilen Komponente A1 und 25 Teilen Komponente B benötigte 90 Minuten bis zur Schneidbarkeit für ST-61 und 100 Minuten für Diisononylphthalat. Beispiel 3 belegt, dass der beschleunigende Effekt auch über eine Lagerzeit von 6 Monaten erhalten bleibt. Die B-Komponenten sind lagerstabil, es sind lediglich nach Absetzen von Festbestandteilen diese wieder aufzurühren.

### Beispiel 4

Die Komponente B wurde mit pyrogener Kieselsäure verdickt, um das Absetzen des Feststoffes in der Mischung über die Lagerzeit zu verhindern. Die Rezepturen werden vermischt aus verschiedenen Trägern bzw. Trägergemischen, silan-modifiziertem Polymer SPUR 1015 LM und Weichmacher Diisononylphthalat (DINP), sowie dem kristallwasserhaltigen basischen Aluminiumhydroxidphosphat und verschiedenen Anteilen pyrogener Kieselsäure. Der Anteil an pyrogener Kieselsäure wurde so gewählt, dass eine homogene, leicht standfeste Paste erzeugt wurde. Die hergestellten Komponenten B wurden in verschiedenen Mischungsverhältnissen mit Komponente A1 aus Beispiel 1 im Speedmixer vermischt und die Schneidbarkeit an einer Raupe mit mind. 8 mm Höhe und 8 mm Breite gemessen. Die Ergebnisse fasst Tabelle 4 zusammen.

**Tabelle 4**

| Komponente B | Gewichtsverhältnis A:B | Schneidbarkeit nach |
|---|---|---|
| 20 % SPUR 1015 LM, 60 % DINP | 100:100 | 3 Std. |
| 10 % Aluminiumhydroxidphosphat x 12 H₂O | 100:50 | 75 Min. |
| 10 % Pyrogene Kieselsäure | 100:25 | 60 Min |
| 79 % SPUR 1015 LM | 100:100 | 3 Std. |
| 15 % Aluminiumhydroxidphosphat x 12 H₂O | 100:50 | 60 Min. |
| 6 % Pyrogene Kieselsäure | 100:25 | 60 Min. |
| 90 % SPUR 1015 LM | 100:100 | 13 Std. |
| 5 % Aluminiumhydroxidphosphat x 12 H₂O | 100:50 | 10 Std. |
| 5 % Pyrogene Kieselsäure | 100:25 | 36 Std. |

Die Beispiele zeigen, dass die Mischungsverhältnisse von Komponente A1 : Komponente B in weiten Anteilen (100:100 bis 100:25) variiert werden können und man trotzdem gegenüber der Aushärtung der Komponente A1 durch Luftfeuchtigkeit alleine eine wesentlich beschleunigte Durchhärtung erreicht. Die Zeiten der Schneidbarkeit variieren je nach Mischungsverhältnis stark. Es ist auch zu erkennen, dass ein nur geringer Anteil an basischem Neutralsalz die Zeit bis zur Schneidbarkeit des Gemisches wesentlich verlängert. Es ist eine Mindestmenge an saurem oder basischem Salz nötig, um eine schnelle Härtung zu erreichen.

### Vergleichsbeispiel 1

Verschiedene Salze, die entweder kein Kristallwasser enthalten oder deren wässrige Lösung neutral reagiert, wurden zu Vergleichszwecken geprüft. Dazu wurden zwei verschiedene Komponenten B, nämlich eine erste Komponente B aus 78 % Diisononylphthalat, 14 % hydrophobierter, pyrogener Kieselsäure und 8 % Salz und eine zweite Komponente B aus 50 % Diisononylphthalat, 10 % hydrophobierter, pyrogener Kieselsäure und 40 % Salz hergestellt. Als Salz wurden Calciumcarbonat gefällte Type mit 0,2 Gew.-% Restfeuchte, Calciumcarbonat natürliche Type mit 0,4% Restfeuchte, Natriumhydrogencarbonat, Calciumsulfat wasserfrei und CaSO₄ x 2 H₂O eingesetzt. Mischungen von je 25 Gew.-Teilen dieser Komponenten B mit 100 Teilen der Komponente A1 wie in Beispiel 1 beschrieben besaßen innerhalb von 48 Stunden keine Schneidbarkeit. Nur die Oberfläche hatte sich verfestigt. Damit ist gezeigt, dass weder saure oder basische Salze ohne Kristallwasser, noch kristallwasserhaltige, neutral reagierende Salze die Härtung beschleunigen.

Vergleichsbeispiel 2 10 Gew.-Teile pulverförmiges Calciumhydroxid werden mit 76 Gew.-Teilen Weichmacher Diisononylphthalat und 14 Gew.-Teilen pyrogener Kieselsäure im Vakuumplaneten-Dissolver gemischt. 100 Teile der so hergestellten Mischung werden mit 100, 25 und 10 Gew.-Teilen der Komponente A1 aus Beispiel 1 im Speedmischer vermischt. Bei keinem Mischungsverhältnis ergibt sich eine Beschleunigung, d.h. alle drei Mischungen reagieren ähnlich langsam wie Komponente A1 alleine. Damit ist gezeigt, dass basische, nicht kristallwasserhaltige Salze wie Calciumhydroxid die Mischungen aus silan-modifizierten Polymeren nicht in beschleunigter Weise durchhärten können. Dieser Effekt ist nur mit den kristallwasserhaltigen, sauren oder basischen Salzen zu erreichen.

### Beispiel 5

Zwei Komponenten B1 und B2 wurden hergestellt. Komponente B1 aus 90 % SPUR 1015 LM, 5 % Aluminiumhydroxidphosphat x 12 H₂O und 5 % pyrogener Kieselsäure, und Komponente B2 aus 86 % OH-terminiertes Polydimethylsiloxan, 8 % Aluminiumhydroxidphosphat x 12 H₂O und 6 % pyrogener Kieselsäure. Die Komponente A1 aus Beispiel 1 und jeweils eine Komponente B wurden im Gewichtsverhältnis 100:25 im Speedmixer intensiv vermischt und die Mischung zur Verklebung von Aluminiumprobekörpern verwendet. Die beiden Aluminiumhälften wurden mit Primer vorbehandelt und derart verklebt, dass sich eine Klebefläche von 15 mm x 50 mm ergab, mit einem Abstand der beiden Hälften von 1,5 mm.

Die so verklebten Teile wurden in Anlehnung an EN 28339, Verfahren A, nach bestimmten Zeitabständen bei Raumtemperatur im Zugversuch in der Zugprüfmaschine mit einer Dehngeschwindigkeit von 6 mm/min. bis zum Bruch gedehnt. Dabei wurde jeweils die Maximallast gemessen, in der Tabelle 5 ist der Durchschnittswert von 3 Probekörpern angegeben. Weiter wird untersucht, ob der Bruch in der ausgehärteten Mischung stattfindet (kohäsiv) oder an der Haftfläche

(adhesiv). Zudem wurde nach 7 Tagen analog DIN EN 28339 die Bruchdehnung als Durchschnittswert von 3 Probekörpern bestimmt.

**Tabelle 5**

| | Komponente B1 | | Komponente B2 | |
|---|---|---|---|---|
| Zeit | Maximale Kraft | Bruch | Maximale Kraft | Bruch |
| 2 Std. | 0,49 N/mm² | adhesiv/ kohäsiv | 0,37 N/mm² | adhesiv/ kohäsiv |
| 3 Std. | 0,66 N/mm² | adhesiv/ kohäsiv | 0,55 N/mm² | kohäsiv |
| 5 Std. | 0,73 N/mm² | kohäsiv | 0,76 N/mm² | kohäsiv |
| 8 Std. | 0,88 N/mm² | kohäsiv | 0,87 N/mm² | kohäsiv |
| 24 Std. | 1,05 N/mm² | kohäsiv | 1,04 N/mm² | kohäsiv |
| 7 Tage | 1,49 N/mm² | kohäsiv | 1,17 N/mm² | kohäsiv |
| Bruchdehnung nach 7 Tagen | 370% | | 200% | |

Dieses Beispiel zeigt den Aufbau der Festigkeit und der Haftung im Zugversuch. Es wird deutlich, dass innerhalb der 2. bis 8. Stunde 30 bis 60 % der Endfestigkeit des Vulkanisates festgestellt wird. Die Kraft reicht ab der 2. Stunde aus, um die Funktionalität einer Verklebung zu erreichen. Die erfindungsgemäßen Massen zeigen die in der Praxis für Dichtstoffe gewünschte Bruchdehnung von mindestens 150 %, besser noch mindestens 200 %, für Klebstoffe mindestens 50%, besser noch mindestens 100%.

Der Haftungsaufbau zum Substrat wird bereits innerhalb der ersten 5 Stunden erreicht. Ab diesem Zeitpunkt wird im Zugversuch bis zum Bruch des Probekörpers kein Adhesionsverlust mehr festgestellt, sondern der Probekörper reisst im Klebstoff.

### Beispiel 6

Mit dem gleichen Verfahren wie Komponente A1 in Beispiel 1 wurden Komponenten A2 und A3 mit anderen silan-modifizierten Polymeren hergestellt, Rezepturen siehe Tabelle 6.

**Tabelle 6**

| Komponente | A1 | A2 | A3 |
|---|---|---|---|
| Geniosil STP-E 10 | 16 % | | |
| SPUR 1015 LM | | 20 % | |
| MS Polymer S 303 | | | 33 % |
| Diisononylphthalat | 18 % | 19 % | 18 % |
| Stabilisatoren | 0,5 % | | |
| Antioxidantien/UV-Absorber | | 0,7 % | 0,7 % |
| Gefälltes, gecoatetes CaCO₃ | 48 % | 42 % | 40 % |
| Natürliches CaCO₃ | 12 % | 14 % | |
| Vinyltrimethoxysilan | 1,5 % | 1,3 % | 0,7 % |
| Haftvermittler γ-Aminopropyltrimethoxysilan | 1 % | | |
| Haftvermittler Y-15744 | | 0,8 % | |
| Haftvermittler N-β-Aminoethyl-y-aminopropyl-trimethoxysilan | | | 1 % |
| Dibutylzinndilaurat | 0,02 % | 0,2 % | 0,6 % |
| Titandioxid R-KB-2 | | 2 % | 6 % |
| Farbpaste | 2,98 % | | |

Die Komponenten A2 und A3 härten wie Komponente A1 aus, wenn sie mit der Luft Kontakt haben und mit der Luftfeuchtigkeit reagieren können. Die vernetzende Aushärtung erfolgt von der Oberfläche her, also der Kontaktfläche mit der Luft.

B-Komponenten B3 bis B6 mit verschiedenen dispergierten kristallwasserhaltigen Salzen wurden im Planetendissolver unter Vakuum hergestellt. Es wurden verschiedene Träger verwendet und die Anteile an pyrogener Kieselsäure so gewählt, dass jeweils eine homogene, leicht standfeste Paste entstand. Die Rezepturen gibt Tabelle 7 wieder.

**Tabelle 7**

| Komponente | B3 | B4 | B5 |
|---|---|---|---|
| SPUR 1015 LM Prepolymer | 88 % | | |
| OH-terminiertes Polydimethylsiloxan, 20.000 mPas | | 86 % | |
| Diisononylphthalat | | | 78 % |
| Ammoniumaluminiumsulfat x 12 H₂O | 8 % | | |
| Eisen-II-sulfat x 7 H₂O | | 8 % | |
| Aluminiumhydroxidphosphat x 12 H₂O | | | 8 % |
| Pyrogene Kieselsäure, hydrophobiert | 4 % | 6 % | 14 % |

Die Komponenten A1, A2 und A3 wurden mit den Komponenten B3, B4 und B5 im Mischungsverhältnis 100:25 kombiniert. Die Komponenten wurden im Speedmixer gemischt und die Schneidbarkeit in Abständen von 30 Minuten sowie die Shore A Härte nach 7 Tagen gemessen. Zudem wurde die Mischung unmittelbar nach ihrer Herstellung auf unterschiedliche Substrate raupenförmig aufgebracht und nach 7 Tagen die Haftung beurteilt. Wenn beim Abziehen der Raupen kein Haftverlust zum Substrat festgestellt wird, wird die Haftung positiv beurteilt. Die Ergebnisse fasst Tabelle 8 zusammen.

**Tabelle 8**

| Komponenten | A1, B5 | A2, B4 | A3, B3 |
|---|---|---|---|
| Schneidbar nach | 3 Std. | 5,5 Std. | 1 Std. |
| Shore A | 33 | 20 | 27 |
| Haftung auf: | | | |
| Aluminium | positiv | positiv | positiv |
| Zinkblech | positiv | positiv | positiv |
| Eloxal | positiv | positiv | positiv |
| Kupfer | positiv | positiv | positiv |
| Messing | positiv | positiv | positiv |
| V2A Edelstahl | positiv | positiv | positiv |
| Polyamid | positiv | positiv | positiv |
| Polycarbonat | positiv | positiv | positiv |
| Polyester (GfK) | positiv | positiv | positiv |
| Hart PVC | | positiv | positiv |
| Beton | positiv | positiv | positiv |
| Fliese glasiert, unglasiert | positiv | positiv | positiv |
| Glas | positiv | positiv | positiv |
| Holzlacke | | positiv | |
| Kunststein | | | positiv |

Diese Beispiele belegen, dass die gleichmäßige, beschleunigte Durchhärtung erreicht wird, auch wenn das Trägermaterial in der B-Komponente variiert wird. Der beschleunigende Aushärtungseffekt lässt sich erreichen, wenn das Trägermaterial dem silan-modifizierten Polymer gleich oder ähnlich ist, wie das SPUR 1015 LM Prepolymer, wenn es ein Weichmacher ist, der in den Mischungen eingesetzt wird, wie Diisononylphthalat, oder wenn es, weniger bevorzugt, ein OH-terminiertes Polydimethylsiloxan ist.

Die aufgeführten Einzelbeispiele unterscheiden sich in den Zeiten, wann die Schneidbarkeit erreicht ist, in der Endfestigkeit, welche erreicht werden kann, und darin, auf welchen Substraten das ausgehärtete Produkt haftet.

Der Versuch A1 gemischt mit B5 im Mischungsverhältnis 100:25 wird nach 6 Monaten wiederholt. Es ergibt sich eine Schneidbarkeit nach 90 Minuten, einer kürzeren Zeit als unmittelbar nach dem Herstellen der Mischungen. Der beschleunigte Durchhärtungseffekt lässt sich auch nach Lagerung dieser B-Komponente erzielen.

Das beschriebene Verfahren besitzt gegenüber dem Stand der Technik den Vorteil, dass das Mischungsverhältnis der Komponenten in weiten Bandbreiten variiert werden kann und die Komponenten auch in verschiedenen Farben oder in annähernd gleicher Viskosität hergestellt werden können, um eine kontrollierbare Mischgüte zu erhalten.

Bei Produkten mit weit auseinander liegenden Mischungsverhältnissen der Komponenten, z.B. A zu B im Bereich von 100:10, die über eine Misch- und Dosiereinheit verarbeitet werden, muß das Mischungsverhältnis bei den bisher bekannten zweikomponentigen Systemen genau kontrolliert werden. Mit der Erfindung ist das Mischungsverhältnis gegenüber Schwankungen viel weniger kritisch.

Bei geeigneter Formulierung wird der Haftungsaufbau zu den unterschiedlichen Substraten sehr schnell erreicht, was die Prozesssicherheit erhöht.

Die Mischungen können unabhängig von der üblichen Restfeuchte von Bestandteilen hergestellt werden, es bedarf keiner definierten Zugabe von Wasser oder von Füllstoffen mit definierten Wasseranteilen. Hohe Wasseranteile könnten auch den Haftungsaufbau z.B. zu Glas verlangsamen bzw. die Vernetzung störend beeinflussen. Eine Kontrolle der zugesetzten Feuchtigkeit bei der Herstellung der einzelnen Komponenten ist aufwändig und entfällt bei dem erfindungsgemäßen Verfahren. Auch die natürlicherweise schwankende Restfeuchte insbesondere der Füllstoffe hat keinen maßgeblichen Einfluss auf die Durchhärtung. Die Durchhärtung und der Haftungsaufbau zu Substraten verlaufen annähernd zeitlich parallel. Im Falle der Verwendung der α-Silan-terminierten Polymeren kann ohne den Einsatz von Zinnkatalysator oder anderen metallhaltigen Katalysatoren formuliert werden. Darüber hinaus kann das System frei von Silikon formuliert werden, um die Unverträglichkeit wie mit nachträglich durchgeführten Lackierprozessen oder beschichteten Gläsern oder Natursteinen oder mit anderen in Kontakt kommenden Materialien auszuschließen.

Bei geeigneter Abstimmung der Komponenten erfolgt die Tiefenhärtung gleichmäßig auch bei Auftragsmengen von 1 oder mehreren cm Schichtstärke.

Die Härtung ist weitgehend witterungsunabhängig. Aufgrund der schnellen Härtung stellt auch ein unerwarteter Wetterumschwung wie plötzlich einsetzender Regen kein Problem dar.

### Beispiel 7

Weitere A- und B-Komponenten wurden gemischt, um zu veranschaulichen, wie silan-modifziertes Polymer, Salz und aminischer Haftvermittler auf diese verteilt werden können. Tabellen 9A und 9B listen die Zusammensetzungen, Tabelle 10 veranschaulicht die Ergebnisse.

**Tabelle 9A**

| Substanz | Komponente A4 | Komponente A5 | Komponente A6 | Komponente A7 | Komponente A8 |
|---|---|---|---|---|---|
| Polymer SPUR 1015LM | 20 % | 20 % | | 21 % | 22, |
| Polymer STP-E10* | | | 16,5 % | | |
| amin. Haftvermittler I** | | | | | 1 % |
| Dibutylzinndilaurat | 0,2 % | | | 0,2 % | |
| Weichmacher DINP | 18,3 % | 20 % | 15 % | 17,8 % | 15 % |
| gefällte Kreide | 45 % | 45 % | 50% | 43 % | 45 % |
| natürl. Kreide | 13 % | 13,8 % | 15 % | 15 % | 13 % |
| hydrophob. Kieselsäure | 1 % | | 1 % | | 1 % |
| Vinyltrimethoxysilan | 2,5 % | 1,2 % | 2,5 % | 3 % | 2,5 % |

**Tabelle 9B**

| Substanz | Komponente B6 | Komponente B7 | Komponente B8 | Komponente B9 |
|---|---|---|---|---|
| Al(OH)(PO₄) x 12 H₂O | 10 % | 10 % | 10 % | 8 % |
| amin. Haftvermittler I** | 6 % | | 6 % | |
| amin. Haftvermittler II*** | | 6 % | | |
| Dibutylzinndilaurat | | | 1 % | 1 % |
| Weichmacher DINP | 70 % | 70 % | 69 % | 79 % |
| hydrophob. Kieselsäure | 14 % | 14 % | 14 % | 12 % |

| | | | | |
|---|---|---|---|---|
| * silan-modifiziertes Polymer mit -NH- Gruppen ** γ-Aminopropyltrimethoxysilan *** Y-15744 von Momentive Performance Materials Inc. | | | | |

**Tabelle 10**

| Mischung von | Schneidbarkeit nach | | |
|---|---|---|---|
| im Verhältnis | 100:100 | 100:50 | 100:25 |
| A4 + B6 | 16 Std. | 24 Std. | 32 Std. |
| A4 + B7 | 9 Std. | 16 Std. | 124 Std. |
| A5 + B8 | 1 Std. | 1 Std. | 4 Std. |
| A6 + B8 | 1 Std. | 1 Std. | 3,5 Std. |
| A7+B6 | 15 Std. | 16 Std. | 23 Std. |
| A8+B9 | 6 Std. | 7 Std. | 18 Std. |

Man erkennt, dass sowohl aminischer Haftvermittler als auch Katalysator ohne weiteres in der das kristallwasserhaltige, saure oder basische Salz enthaltenden Komponente eingebracht werden können. Es ist nicht notwendig, diese zusammen mit dem silan-modifizierten Polymer einzubringen.

## Patentansprüche

1. Härtbare Masse, erhältlich als Mischung von wenigstens zwei getrennten zu lagernden Komponenten, von denen eine Komponente ein silan-modifiziertes Polymer enthält und diese oder eine zweite Komponente ein kristallwasserhaltiges, saures oder basisches Salz enthält, wobei in einer oder beiden oder einer weiteren Komponente ein aminischer Haftvermittler enthalten ist, wobei der Haftvermittler eine aminische Silan- oder Siloxanverbindung ist, mit der Maßgabe dass keine Komponente silan-modifiziertes Polymer und kristallwasserhaltiges, saures oder basisches Salz und aminischen Haftvermittler enthält,
wobei das silan-modifizierte Polymer ein von Silikonen verschiedener silan-modifizierter Polyether oder ein silan-modifiziertes Polyurethan oder ein Gemisch davon ist und die Struktur aufweist
(Alkyl-O)₃-Si-X-Polymer-X-Si-(O-Alkyl)₃
oder
(Alkyl-O)₂(Alkyl)-Si-X-Polymer-X-Si-(Alkyl)(O-Alkyl)₂
wobei X eine Alkylen-Verbindungsgruppe ist, und
wobei das kristallwasserhaltige Salz ein Hydroxidphosphat ist.

2. Masse gemäß Anspruch 1, **dadurch gekennzeichnet, dass** das Kation des Salzes ausgewählt ist unter Ammonium und Metallkationen von Metallen der Hauptgruppe III oder der Nebengruppe VIII.

3. Masse gemäß mindestens einem der Ansprüche 1 bis 2, **dadurch gekennzeichnet, dass** eine Komponente 3 bis 50 Gew.-% silan-modifiziertes Polymer, 0 bis 40 Gew.-% Weichmacher, 0 bis 60 Gew.-% Füllstoffe, 0 bis 2 Gew.-% Stabilisatoren, 0 bis 5 Gew.-% Trocknungsmittel, 0 bis 10 Gew.-% aminischen Haftvermittler und 0 bis 2 Gew.-% Katalysatoren enthält, mit der Maßgabe, dass die Summe aller Bestandteile 100 Gew.-% ergibt.

4. Masse gemäß mindestens einem der Ansprüche 1 bis 3, **dadurch gekennzeichnet, dass** eine Komponente 1 bis 90 Gew.-% Salz und 10 bis 95 Gew.-% Träger sowie 0 bis 30 Gew.-% Füllstoff, insbesondere Kieselsäure, und 0 bis 50 Gew.-% Stabilisatoren, Trocknungsmittel, Katalysatoren und weitere Füllstoffe enthält, mit der Maßgabe, dass die Summe aller Bestandteile 100 Gew.-% ergibt.

5. Masse gemäß Anspruch 4, **dadurch gekennzeichnet, dass** der Träger ausgewählt ist unter silan-modifizierten Polymeren, Weichmachern, Hydroxy-terminiertem Polydialkylsiloxan und Alkyl-terminiertem-Polydialkylsiloxan.

6. Masse gemäß mindestens einem der Ansprüche 1 bis 5, **dadurch gekennzeichnet, dass** in mindestens einer Komponente Weichmacher enthalten sind, die ausgewählt sind unter Phthalaten, Cyclohexandicarbonsäureestern, Estern organischer Säuren, Derivaten von Polyestern, Polyethern, Epoxyden und ähnlichen, Polybutenen, Rizinusöl (Castor oil), Naturölen und Gemischen davon.

7. Masse gemäß mindestens einem der Ansprüche 1 bis 6, **dadurch gekennzeichnet, dass** in mindestens einer Komponente Füllstoffe enthalten sind, die ausgewählt sind unter Kieselsäure, Bentonit, Bariumsulfat, Ton, Aluminiumoxiden und -hydroxiden, Chromoxiden, Titandioxid, Graphit, Russ, und Gemischen davon.

8. Masse gemäß mindestens einem der Ansprüche 1 bis 7, **dadurch gekennzeichnet, dass** eine erste Komponente das silan-modifizierte Polymer und den aminischen Haftvermittler und eine zweite Komponente das kristallwasserhaltige, saure oder basische Salz enthält.

9. Masse gemäß mindestens einem der Ansprüche 1 bis 8, **dadurch gekennzeichnet, dass** eine erste Komponente den aminischen Haftvermittler enthält und eine zweite Komponente das kristallwasserhaltige, saure oder basische Salz und das silan-modifizierte Polymer enthält.

10. Masse gemäß mindestens einem der Ansprüche 1 bis 9, **dadurch gekennzeichnet, dass** eine erste Komponente das silan-modifizierte Polymer enthält und eine zweite Komponente das kristallwasserhaltige, saure oder basische Salz und den aminischen Haftvermittler enthält.

11. Masse gemäß einem der Ansprüche 8 bis 10, **dadurch gekennzeichnet, dass** in einer oder beiden Komponenten zusätzlich Weichmacher, Füllstoffe, Stabilisatoren, Trocknungsmittel, nicht-aminische Haftvermittler und/oder Katalysatoren enthalten sind.

12. Masse gemäß einem der Ansprüche 1 bis 11, **dadurch gekennzeichnet, dass** insgesamt von 5 bis 50 Gew.-%, vorzugsweise von 10 bis 40 Gew.-% eines oder mehrere silan-modifizierter Polymere, von 1 bis 15 Gew.-%, vorzugsweise von 3 bis 10 Gew.-% eines oder mehrerer kristallwasserhaltige saure und/oder basische Salze und von 0,1 bis 5 Gew.-%, vorzugsweise von 0,5 bis 2 Gew.-% eines oder mehrerer aminischer Haftvermittler sowie von 0 bis 2 Gew.-%, vorzugsweise von 0,1 bis 1 Gew-% eines oder mehrerer Katalysatoren enthalten sind.

13. Masse gemäß einem der Ansprüche 1 bis 12, **dadurch gekennzeichnet, dass** sie in allen Komponenten lösemittelfrei oder silikonfrei oder lösemittel- und silikonfrei ist.

14. Verfahren zum Beschleunigen der Härtung von Massen auf Basis von silan-modifiziertem Polymer nach einem der Ansprüche 1-13, wobei ein mit Wasser vernetzbares silan-modifiziertes Polymer, welches einen von Silikonen verschiedenen silan-modifizierten Polyether oder ein silan-modifiziertes Polyurethan oder ein Gemisch davon gemäß einem der Ansprüche 1-13 umfasst, ein kristallwasserhaltiges saures oder basisches Salz, welches ein Hydroxidphosphat ist, und ein aminischer Haftvermittler, welcher als Haftvermittlerkomponente eine aminische Silan- oder Siloxanverbindung enthält, so auf zumindest zwei Komponenten verteilt bereitgestellt wird, dass keine Komponente silan-modifiziertes Polymer, kristallwasserhaltiges, saures oder basisches Salz und aminischer Haftvermittler enthält, und die beiden Komponenten zur Härtung vermischt werden.

## Claims

1. A curable compound, which can be obtained as a mixture of at least two components to be stored separately, of which one component contains a silane-modified polymer and said component or a second component contains an acid or basic salt containing water of crystallisation, wherein an aminic adhesion promoter is contained in at least one component or both components or a further component, wherein the adhesion promoter is an aminic silane or siloxane compound, provided that none of the components contains a silane-modified polymer and an acid or basic salt containing water of crystallisation and an aminic adhesion promoter, wherein the silane-modified polymer is a silane-modified polyether or a silane-modified polyurethane or a mixture thereof different from the silicones, and comprises the structure
(alkyl-O)₃-Si-X-polymer-X-Si-(O-alkyl)₃
or
(alkyl-O)₂(alkyl)-Si-X-polymer-X-Si-(alkyl)(O-alkyl)₂,
wherein X is an alkylene compound group, and
wherein the salt containing water of crystallisation is a hydroxide phosphate.

2. A compound according to claim 1, **characterized in that** the cation of the salt is selected from ammonium and metal cations of metals of the main group III or subgroup VIII.

3. A compound according to at least one of the claims 1 to 2, **characterized in that** a component contains 3 to 50% by weight of silane-modified polymer, 0 to 40% by weight of plasticiser, 0 to 60% by weight of fillers, 0 to 2% by weight of stabilisers, 0 to 5% by weight of desiccants, 0 to 10% by weight of aminic adhesion promoters, and 0 to 2% by weight of catalysts, provided that the sum total of all components equals 100% by weight.

4. A compound according to at least one of the claims 1 to 3, **characterized in that** a component contains 1 to 90% by weight of salt and 10 to 95% by weight of a carrier, and 0 to 30% by weight of a filler, especially silicic acid, and 0 to 50% by weight of stabilisers, desiccants, catalysts and further fillers, provided that the sum total of all components equals 100% by weight.

5. A compound according to claim 4, **characterized in that** the carrier is selected from silane-modified polymers, plasticisers, hydroxyl-terminated polydialkyl siloxane, and alkyl-terminated polydialkyl siloxane.

6. A compound according to at least one of the claims 1 to 5, **characterized in that** at least one of the components contains plasticisers selected from phthalates, cyclohexane dicarboxylic acid esters, esters of organic acids, derivatives of polyesters, polyethers, epoxides and the like, polybutenes, ricinus oil (castor oil), natural oils, and mixtures thereof.

7. A compound according to at least one of the claims 1 to 6, **characterized in that** at least one of the components contains fillers selected among silicic acid, bentonite, barium sulphate, clay, aluminium oxides and hydroxides, chromium oxides, titanium dioxides, graphite, carbon black, and mixtures thereof.

8. A compound according to at least one of the claims 1 to 7, **characterized in that** a first component contains the silane-modified polymer and the aminic adhesion promoter, and the second component contains the acid or basic salt containing water of crystallisation.

9. A compound according to at least one of the claims 1 to 8, **characterized in that** a first component contains the aminic adhesion promoter, and a second component contains the acid or basic salt containing water of crystallisation and the silane-modified polymer.

10. A compound according to at least one of the claims 1 to 9, **characterized in that** a first component contains the silane-modified polymer, and a second component contains the acid or basic salt containing water of crystallisation and aminic adhesion promoter.

11. A compound according to one of the claims 8 to 10, **characterized in that** one or both components additionally contain plasticisers, fillers, stabilisers, desiccants, non-aminic adhesion promoters and/or catalysts.

12. A compound according to one of the claims 1 to 11, **characterized in that** it contains in total 5 to 50% by weight, preferably 10 to 40% by weight, of one or several silane-modified polymers, 1 to 15% by weight, preferably 3 to 10% by weight, of one or several acid and/or basic salts containing water of crystallisation, and 0.1 to 5 % by weight, preferably 0.5 to 2% by weight, of one or several aminic adhesion promoters, and 0 to 2% by weight, preferably 0.1 to 1 % by weight, of one or several catalysts.

13. A compound according to one of the claims 1 to 12, **characterized in that** it is solvent-free or silicone-free, or solvent-free and silicon-free, in all of the components.

14. A method for accelerating curing of compounds based on the silane-modified polymer according to one of the claims 1 to 13, wherein a silane-modified polymer, which is cross-linkable with water and which comprises a silane-modified polyester or a silane-modified polyurethane or a mixture thereof according to one of the claims 1 to 13 which is different from silicones, contains an acid or basic salt containing water of crystallisation, which is a hydroxide phosphate, and an aminic adhesion promoter which contains an aminic silane or siloxane compound as the adhesion promoter component, and is provided in a distributed manner among at least two components in such a way that none of the components contains a silane-modified polymer, an acid or basic salt containing water of crystallisation, and an aminic adhesion promoter, and the two components are mixed for curing.

## Revendications

1. Pâte durcissable, se présentant comme un mélange d'au moins deux composants à stocker séparément, dont l'un contient un polymère modifié avec du silane et celui-ci ou un deuxième composant contient un sel acide ou basique contenant de l'eau de cristallisation, dans lequel un composant ou les deux ou un autre composant contient un activateur d'adhérence aminique, lequel activateur d'adhérence est un composé aminosilane ou aminosiloxane, telle qu'aucun composant ne contienne les polymère modifié avec du silane et le sel acide ou basique contenant de l'eau de cristallisation et l'activateur d'adhérence aminique, dans laquelle le polymère modifié avec du silane est un polyéther modifié avec du silane différent des silicones ou un polyuréthane modifié avec du silane ou un mélange de ceux-ci et présente la structure
(alkyl-O)₃-Si-X-polymère-X-Si-(O-alkyl)₃
ou
(alkyl-O)₂(alkyl)-Si-X-polymère-X-Si-alkyl)(O-alkyl)₂
dans laquelle X est un groupe de liaison alkylène et
dans laquelle sel contenant de l'eau de cristallisation et un hydroxyphosphate.

2. Masse selon la revendication 1, **caractérisée en ce que** le cation du sel est choisi parmi l'ammonium et des ions métalliques de métaux du groupe principal III ou du groupe secondaire VIII.

3. Masse selon l'une au moins des revendications 1 à 2, **caractérisée en ce qu'**un composant contient de 3 à 50 % en poids de polymère modifié avec du silane, de 0 à 40 % en poids de plastifiant, de 0 à 60 % en poids de charges de remplissage, de 0 à 2 % en poids de stabilisants, de 0 à 5 % en poids de siccatifs, de 0 à 10 % en poids d'activateur d'adhérence aminique et de 0 à 2 % en poids de catalyseurs, de telle façon que la somme de tous les ingrédients donne 100 % en poids.

4. Masse selon l'une au moins des revendications 1 à 3, **caractérisée en ce qu'**un composant contient de 1 à 90 % en poids de sel et de 10 à 95 % en poids de véhicule et de 0 à 30 % en poids de charge de remplissage, en particulier d'acide silicique, et de 0 à 50 % en poids de stabilisants, de siccatifs, de catalyseurs et d'autres charges de remplissage, de telle sorte que la somme de tous les ingrédients donne 100 % en poids.

5. Masse selon la revendication 4, **caractérisée en ce que** le véhicule est choisi parmi des polymères modifiés avec du siloxane, des plastifiants, du polydialkylsiloxane à terminaison hydroxy et du polydialkylsiloxane à terminaison alkyle.

6. Masse selon l'une au moins des revendications 1 à 5, **caractérisée en ce qu'**au moins un composant contient des plastifiants choisis parmi les phtalates, les esters d'acide cyclohexanedicarboxylique, les esters d'acides organiques, les dérivés de polyesters, les polyéthers, les époxys et similaires, les polybutènes, l'huile de ricin (*castor oil*), les huiles naturelles et des mélanges de ceux-ci.

7. Masse selon l'une au moins des revendications 1 à 6, **caractérisée en ce qu'**au moins un composant contient des charges de remplissage choisies parmi l'acide silicique, la bentonite, le sulfate de baryum, l'argile, les oxydes et hydroxydes d'aluminium, les oxydes de chrome, le dioxyde de titane, le graphite, la suie et des mélanges de ceux-ci.

8. Masse selon l'une au moins des revendications 1 à 7, **caractérisée en ce qu'**un premier composant contient le polymère modifié avec du silane et l'activateur d'adhérence aminique et un deuxième composant contient le sel acide ou basique contenant de l'eau de cristallisation.

9. Masse selon l'une au moins des revendications 1 à 8, **caractérisée en ce qu'**un premier composant contient l'activateur d'adhérence aminique et un deuxième composant contient le sel acide ou basique contenant de l'eau de cristallisation et le polymère modifié avec du silane.

10. Masse selon l'une des revendications 1 à 9, **caractérisée en ce qu'**un premier composant contient le polymère modifié avec du silane et un deuxième composant contient le sel acide ou basique contenant de l'eau de cristallisation et l'activateur d'adhérence aminique.

11. Masse selon l'une des revendications 8 à 10, **caractérisée en ce qu'**un composant ou les deux contiennent en outre des plastifiants, des charges de remplissage, des stabilisants, des siccatifs, des activateurs d'adhérence non aminiques et/ou des catalyseurs.

12. Masse selon l'une des revendications 1 à 11, **caractérisée en ce qu'**elle contient au total de 5 à 50 % en poids, de préférence de 10 à 40 % en poids d'un ou plusieurs polymères modifiés avec un silane, de 1 à 15 % en poids, de préférence de 3 à 10 % en poids d'un ou plusieurs sels acides et/ou basiques contenant de l'eau de cristallisation et de 0,1 à 5 % en poids, de préférence de 0,5 à 2 % en poids d'un ou plusieurs activateurs d'adhérence aminiques et de 0 à 2 % en poids, de préférence de 0,1 à 1 % en poids d'un ou plusieurs catalyseurs.

13. Masse selon l'une des revendications 1 à 12, **caractérisée en ce qu'**elle est sans solvants ou sans silicones ou sans solvants et sans silicones dans tous ses composants.

14. Procédé pour accélérer le durcissement de masses à base de polymère modifié avec un silane selon l'une des revendications 1 à 13, dans lequel un polymère modifié avec du silane pouvant polymériser à l'eau, qui comprend un polyéther modifié avec du silane différent des silicones ou un polyuréthane modifié avec du silane ou un mélange de ceux-ci selon l'une des revendications 1 à 13, un sel acide ou basique contenant de l'eau de cristallisation qui est un hydroxyphosphate, et un activateur d'adhérence aminique qui contient comme composant activateur d'adhérence un composé aminosilane ou aminosiloxane, se présente réparti en au moins deux composants de telle manière qu'aucun composant ne contienne le polymère modifié avec du silane, le sel acide ou basique contenant de l'eau de cristallisation et l'activateur d'adhérence aminique, et les deux composants sont mélangés en vue du durcissement.
